# EUROPEAN PATENT SPECIFICATION

(11) **EP 1 104 612 B1**
(45) Date of publication and mention of the grant of the patent: **27.08.2003**
(21) Application number: 99941626.6
(22) Date of filing: 11.08.1999
(51) Int. Cl.: H04L 25/45, G06F 13/12, G06F 13/38

(54) **DATA-COMMUNICATIONS UNIT SUITABLE FOR ASYNCHRONOUS SERIAL DATA TRANSMISSION**
DATENÜBERTRAGUNGSEINHEIT FÜR ASYNCHRONE SERIELLE DATENÜBERTRAGUNG
UNITE DE TRANSMISSION DE DONNEES SERIELLES ASYNCHRONES

(30) Priority: 12.08.1998 NL 1009845
(43) Date of publication of application: 06.06.2001
(73) Proprietor: Koninklijke KPN N.V., 9726 AE Groningen (NL)
(72) Inventor: ROOS VAN RAADSHOOVEN, Leonard, Antonius, NL-2724 VS Zoetermeer (NL); PIETERSE, Rob, NL-2111 ZL Aerdenhout (NL)
(74) Representative: Wuyts, Koenraad Maria
(86) International application number: EP9905985
(87) International publication number: WO00010300

(56) References cited:
- EP-A- 0 525 860
- EP-A- 0 772 130
- US-A- 4 823 312
- US-A- 5 218 683

## Description

The invention relates to a data-communications unit according to the preamble of claim 1. Moreover, the invention relates to a data-communications unit according to the preamble of claim 3.

A data-communications unit of this type is disclosed in US-A-4823312. With the known data-communications unit, first memory means for a transmission direction from a data-processing device, which is a computer, to a peripheral device, which is a modem, consist of a serial circuit of a data-output register, which is connected to a common connection bus of the data-processing unit, and a First-In, First-Out data-output memory (FIFO), which is connected to the peripheral device by way of a parallel/serial shift register. For this transmission direction, second memory means consist of a control register which is connected to the connection bus and, by way of a coupling chain, to the peripheral device. In the other transmission direction, the first memory means consist of a serial circuit of a data-input register connected to the connection bus and a data-input FIFO which is connected to the peripheral device by way of a serial/parallel shift register. For said transmission direction, second, memory means consist of a status register connected between the connection bus and the coupling chain. The registers serve to store a single data item having the size of, e.g., one byte. The control register serves to control the peripheral device, by way of the coupling chain, from the data-processing device, in particular for, as a function thereof, delivering serial data from the first memory means by way of the parallel/serial shift register to the peripheral device. The status register serves to receive the status of the peripheral device by way of the coupling chain of the peripheral device and to deliver it to the data-processing device for, as a function thereof, driving the peripheral device, and for transferring serial data by way of the memory means. The FIFOs serve to provisionally store several data items prior to the transfer thereof to the peripheral device or to the data-processing device, respectively, with the purpose of thus restricting the number of interrupt signals to the data-processing device and/or to enable direct memory access (DMA) for transmitting relatively large blocks of data between a memory of the data-processing device and the FIFO in question.

By way of the coupling chain of the data-communications unit, control signals are transmitted to the peripheral device, and status signals are received from the peripheral device. As a function of the transmission protocol employed, one or more of the control signals delivered by the data-processing device by way of the coupling chain to the peripheral device may contain the information that data subsequently received from the data-communications unit must be ignored. For an RS-232 link, the signal having the function DTR (" Data Terminal Ready" ) is such a signal. Although the data-processing device delivers such a management signal to the peripheral device, there may still be data present in the data-output FIFO which, when received by the peripheral device, is ignored however and therefore lost. The occurrence of such a situation depends on the speed with which the data-processing device transmits said data to a further device connected thereto.

A similar situation may occur in the other transmission direction, namely, for conducting data from the peripheral device in the data-processing device. In such situation, the data-input FIFO may still contain data while the peripheral device has already delivered a status or management signal which indicates to the data-processing device that the transmission has terminated and further data must be ignored. For an RS-232 link, such signal is, e.g., the signal having the function DCD (" Data Carrier Detect" ) or having the function DSR (" Data Set Ready" ).

The object of the invention is to eliminate the aforementioned objections of ignoring and losing data in at least one of the transmission directions.

To this end, the invention provides a data-communications unit according to claims 1 or 3 respectively.

As a result, a control signal for the peripheral device, or a status signal from the peripheral device, is saved with retention of the temporary position with respect to the data to be transmitted or received, respectively, until it is its turn to be processed according to its relative time position. The data-communications unit will therefore be transparent for the sequence in which it transmits data, irrespective of its type. As a result, there will take place no premature processing of the control signals and/or status signals, and they will therefore not result in ignoring or losing data.

The invention will be further explained below, in conjunction with the enclosed drawings, in which:
FIG. 1 shows a block diagram of a first embodiment of the data-communications unit according to the invention;
FIG. 2 shows a diagram of exemplary contents of the FIFOs in a transmission direction of the unit of FIG. 1;
FIG. 3 shows a block diagram of a second embodiment of the data-communications unit according to the invention; and
FIG. 4 shows a diagram of an exemplary content of the FIFO for a transmission direction of the unit shown in FIG. 3.

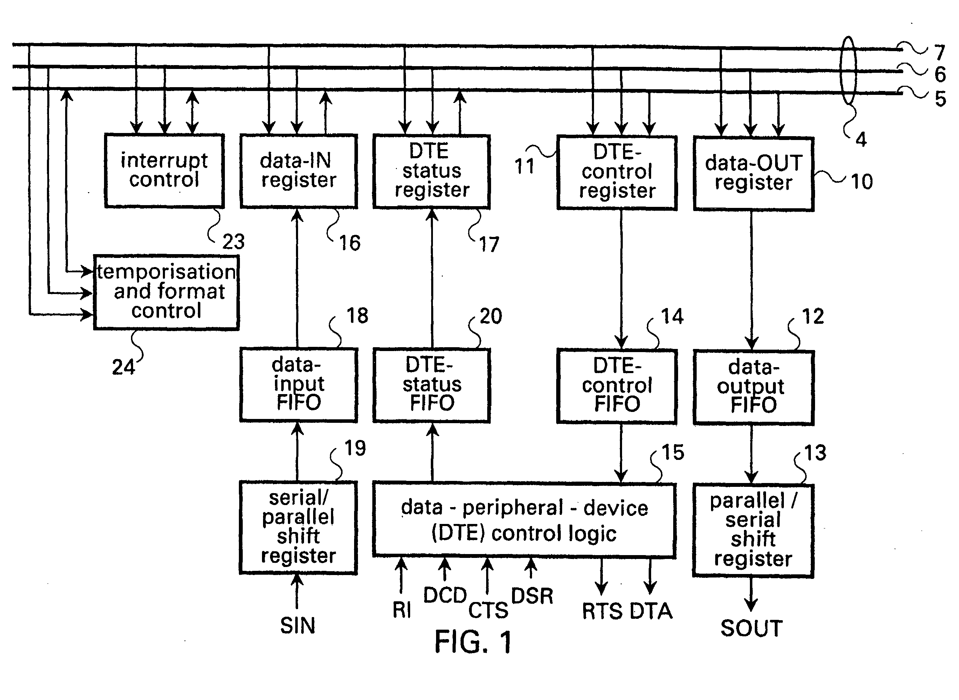

The data-communications unit shown in FIG. 1 is intended to be connected between a data-processing device (not shown) and a peripheral device (DTE; "Data Terminal Equipment"; not shown). The data-processing device specifically is a computer and the peripheral device is, e.g., a modem.

The data-communications unit is suitable to be connected, by way of a connection bus 4, to the data-processing device. The connection bus 4 comprises a data bus 5, an address bus 6, and a control bus 7.

For an RS-232 link, there are exchanged, between the data-communications unit and a modem as a peripheral device, the signals below and those shown in FIG. 1, inter alia:

| | |
|---|---|
| **ACRONYMS** | **EXPLANATION** |
| DTR ("Data Terminal Ready") | indicates to modem that the local computer is ready for communication |
| RTS ("Request To Send") | transmission request to modem, used in conjunction with CTS |
| DSR ("Data Set Ready") | modem indicates implementation of connection to telephone line |
| CTS ("Clear To Send") | transmission approval from modem, used in conjunction with RTS |
| DCD ("Data Carrier Detect") | modem indicates detection of a carrier-wave signal on the line |
| RI ("Ring Indicator") | modem indicates presence of ringing signals |
| SOUT | serial data to modem |
| SIN | serial data from modem |

In a transmission direction for transmitting data and control signals from the data-processing device to the peripheral device DTE, the data-communications unit comprises a data-output register 10 and a DTE-control register 11, which are connected to the connection bus 4. An output of the data-output register 10 is connected to a First-In, First-Out data-output memory (FIFO) 12, of which one output is connected to a parallel/serial shift register 13, of which an output SOUT is connected to the peripheral device for delivering serial data thereto. An output of the DTE-control register 11 is connected to a DTE-control FIFO 14, of which an output is connected to a DTE-control logic (coupling chain) 15.

For the other transmission direction -- for transmitting data and status signals from the modem to the data-processing device-- there are connected, to the connection bus 4, a data-input register 16 and a DTE-status register 17. An input of the data-input register 16 is connected to an output of a data-input FIFO 18, of which an input is connected to an output of a serial/parallel shift register 19, of which an input SIN receives serial data from the modem. An input of the DTE-status register 17 is connected to an output of a DTE-status FIFO 20, of which an input is connected to the DTE-control logic 15. The control logic 15 delivers said signals DTR and RTS to the modem, and receives said signals DSR, CTS, DCD and RI from the modem.

The registers 10, 11, 17, 16 having individual addresses are accessible from the connection bus 4 and, just as the shift registers 13 and 19, are suitable for storing only one data item, e.g., having the size of one byte. The FIFOs 12 and 14 have the same size for storing several data items. The FIFOs 18 and 20 also have the same size, but not necessarily the same size as that of the FIFOs 12 and 14.

To the connection bus 4, there are also connected an interrupt control 23 and a temporisation and format control 24. The interrupt control 23 serves for delivering to the data-processing device, as a function of a fill factor of the data-output FIFO 12 and/or the data-input FIFO 18, an interrupt signal for entering data into data-output FIFO 12 or for reading data from data-input FIFO 18, respectively.

The interrupt control 23 may be suitable for monitoring several fill factors of the FIFOs, including levels indicating that the FIFO in question, with the exception of a specific number of locations, is entirely filled or entirely empty. In particular, said fill factors may be set from the data-processing device in the interrupt control 23.

The temporisation and format control 24 serves for setting the format (number of start and stop bits, and parity bit) and the transmission speed of serial data SOUT to be exported to the modem and also, though not necessarily identically, for the serial data SIN delivered from the modem. The control 24 is also used for clocking the memory means 10, 11, 12, 14, 16, 17, 18, 20 and the shift registers 13 and 19.

A FIFO-control register (not shown) may be present to render the FIFOs in each transport direction transparent (as if replaced by a direct connection between input and output). When rendered transparent, the data-communications unit is fully compatible with data-communications units without FIFOs already known earlier.

When, in the data-communications unit according to FIG. 1, the DTE-control FIFO 14 and the DTE-status FIFO 20 are each replaced by a direct connection between the DTE-control register 11 and the DTE-control logic 15, respectively, between the DTE-status register 17 and the DTE-control logic 15, there is obtained a data-communications unit which is substantially identical to the one disclosed in US-A-4823312. As explained, with such known data-communications unit ignoring or losing data present in a data FIFO may occur when, following the entry of a data item into the data FIFO in question, a control signal or status signal is delivered to the data-communications unit which reaches the modem or the data-processing device, respectively, sooner than said data item entered most recently in the data FIFO.

This is why, according to the invention, the DTE-control FIFO 14 is used for the transmission direction to the peripheral equipment, and it is clocked synchronously with the data-output FIFO 12 in such a manner, that during the entry of a control-data item (management-data item) from the DTE-control register 11 into a location of the DTE-control FIFO 14 there is erased, or there is ignored upon read-out, a location having the same sequence number as the data-output FIFO 12.

For the other transmission direction, according to the invention, there is applied the DTE-status FIFO 20, which is clocked synchronously with the data-input FIFO 18 in such a manner that, during the entry of a status-data item (management-data item) from the DTE-control logic 15 into a location of the DTE-status FIFO, there is erased, or there is ignored during read-out, a location having the same sequence number as the data-input FIFO 18.

Therefore, it applies to either transmission direction that a sequence of data and management signals delivered to the data-communications unit is again exported in the same sequence, as a result of which the functioning of the data-communications unit is transparent for the sequence of data of a transmission, and cannot be the cause of ignoring or losing data.

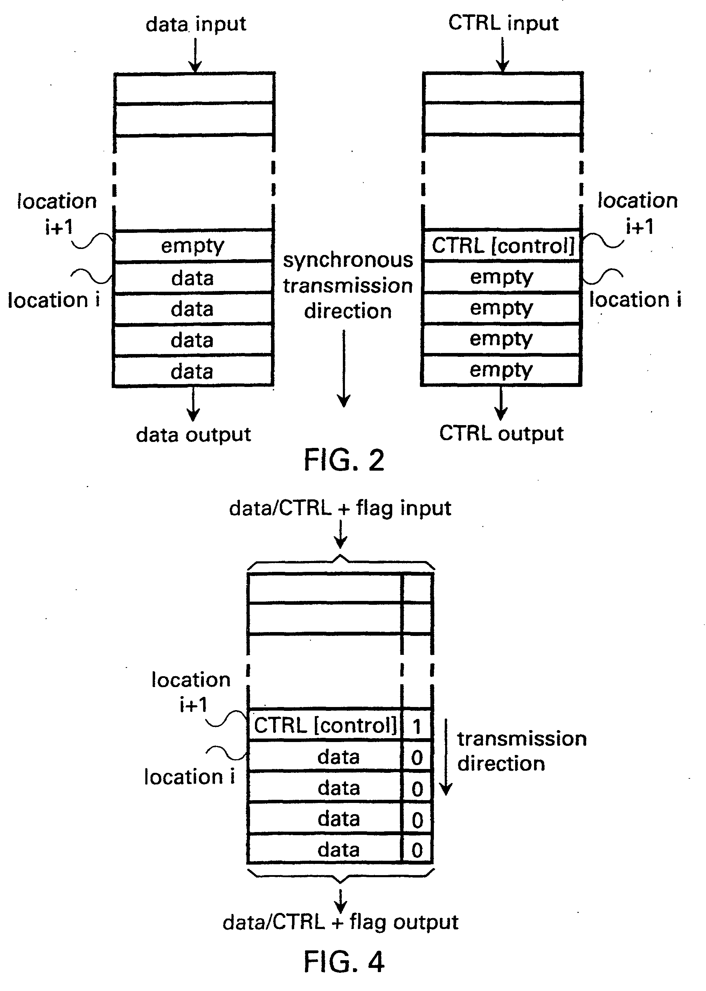

FIG. 2 shows an example of the contents of the FIFOs for either of the transmission directions for the first embodiment, shown in FIG. 1, of the data-communications unit according to the invention. The data FIFO 12 or 18 in question receives data input, and the DTE-FIFO 14 or 20 associated with the transmission direction receives management data (CTRL input). In the example, the data FIFO contains four data items which have been received from the data-input register 10 or from the serial/parallel shift register 19, and whose data item was received in location 1 as the most recent of the four. Locations having the same sequence number of the DTE-FIFO 14 or 20 are empty or are ignored during read-out. When the data-communications unit, following the entry of a data item into a location i of the associated data FIFO 12 or 18, receives a management-data item, said management-data item is written into location i+1 of the DTE-FIFO 14 or 20, respectively, while the location having the same sequence number as the data FIFO 12 or 18 is erased or is ignored during read-out. Since, for either transmission direction, the pair of FIFOs, as indicated in FIG. 2, is clocked synchronously, a sequence of data and management data received is maintained with every transfer thereof.

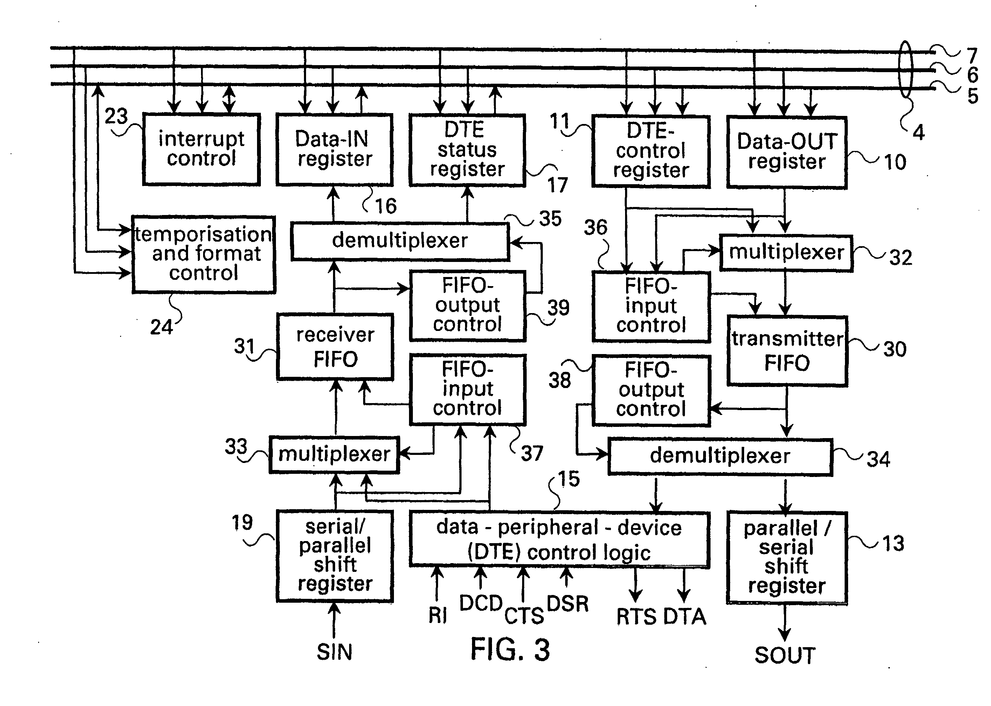

The second embodiment, shown in FIG. 3, of the data-communications unit according to the invention, for each transmission direction comprises only one FIFO, namely, a transmitter FIFO 30 for the transmission direction towards the peripheral device and a receiver FIFO 31 for transmission from the peripheral device.

For either transmission direction, at the input of the associated FIFO 30, 31, there is connected a multiplexer 32 or 33, respectively, and to the output there is connected an associated demultiplexer 34 or 35, respectively. The multiplexers 32, 33 are controlled by an associated FIFO-input control 36 or 37, respectively. The demultiplexers 34, 35 are controlled by an associated FIFO-output control 38 or 39, respectively. For the transmission direction towards the peripheral device, the multiplexer 32, depending on a control signal from the FIFO-input control 36 lets a data item through from the data-output register 10 or from the DTE-control register 11 to the transmitter FIFO 30, and the FIFO-input control 36 delivers a corresponding flag signal to the transmitter FIFO 30, which flag is written into the transmitter FIFO 30 simultaneously with the data item let through by the multiplexer 32. The FIFO-output control 38 detects a flag associated with a data item read from the transmitter FIFO 30 and, depending thereon, controls the demultiplexer 34 for letting the data item read from the transmitter FIFO 30 through to the parallel/serial shift register 13 or to the DTE-control logic 15.

Depending on the receipt of a data item from the serial/parallel shift register 19 or from a status-data item from the DTE-control logic 15, the FIFO-input control 37 controls the multiplexer 33 for letting through to the receiver FIFO 31, and writing therein, the data item received. The FIFO-input control 37 simultaneously therewith outputs an associated flag signal to the receiver FIFO 31, which is written into the receiver FIFO simultaneously with the data item let through by the multiplexer 33. The FIFO-output control 39 detects the flag associated with a data item read from the receiver FIFO 31 and, as a function thereof, controls the demultiplexer 35 to let through the data item read out to the data-input register 16 or to the DTE-status register 17.

By way of example, FIG. 4 shows the content of either of the FIFOs 30, 31 of the second embodiment of the data-communications unit according to the invention, the FIFO in four locations still containing data to be read out, of which the data item in the location i was received as the most recent one and a management-data item CTRL subsequently received being stored in location i+1. Each stored data item is accompanied by a flag which, for a management-data item CTRL, e.g., has the value "1" and which otherwise has the value "0".

It should be noted that the FIFOs 12, 14, 18, 20 may have various embodiments and may consist of shift registers or random access memories (RAMs). That is why the sequence numbers of memory locations referred to above and the indication of a transmission direction or transport direction within the FIFOs are merely illustrative.

Furthermore, the FIFOs may be arranged in such a manner that they are capable of taking over the function of the registers 10, 11, 16, 17 connected to the connection bus 4, as a result of which said registers may be omitted.

In addition, in the second embodiment of FIG. 3 the functions of the multiplexers 32, 33, the demultiplexers 34, 35, and the FIFO controls 36, 37, 38, 39 may be accomplished by the associated FIFOs 30 and 31, respectively. Accomplishing said functions is relatively simple since it suffices, for each memory location of a FIFO 30, 31, to have available an associated other memory location to the size of one bit for storing the flag value, the data inputs of the replaced multiplexers may be connected in parallel, as if the multiplexers are transparent, and entering a flag value into a FIFO need depend only on the detection of a data item at the output of one of the registers 10, 11, 19 or the DTE-control logic 15.

## Claims

1. Data-communications unit suitable for asynchronous serial data transmission between a data-processing device and a peripheral device, comprising first and second memory means which are connected between a connection bus (4), to be connected to the data-processing device, and coupling means (13, 15, 19), to be connected to the peripheral device, for sequentially provisionally storing, in the first memory means, data from a transmission between the data-processing device and the peripheral equipment, and for storing, in the second memory means, management data for managing the transmission, the first memory means comprising, per transmission direction, a FIFO memory (12, 18) having several memory locations, **characterised in that** the second memory means comprise, per transmission direction, a second FIFO memory (14, 20 ), both FIFO memories (12, 14; 18, 20 ) being clocked synchronously for each write operation and each read operation for a memory.

2. Data-communications unit according to claim 1, **characterised in that**, for either transmission direction, first and second memory means and associated coupling means (13, 15, 19) are coupled between the connection bus (4) and the peripheral device, the FIFO memories (12, 14) associated with the one transmission direction being clocked independently from the FIFO memories (18, 20) associated with the other transmission direction.

3. Data-communications unit suitable for asynchronous serial data transmission between a data-processing device and a peripheral device, comprising memory means which are connected between a connection bus (4), to be connected to the data-processing device, and coupling means (13, 15, 19), to be connected to the peripheral device, for sequentially provisionally storing data from a transmission between the data-processing device and the peripheral equipment, and for storing management data for managing the transmission, **characterised in that** the memory means consist of one single FIFO memory (30, 31) per transmission direction, while distinguishing means are provided for, during an entering operation, depending on the type of a data item to be entered, also entering a flag indicative of the data item, and for, during a read operation, depending on a flag read, further transporting the associated data item.

4. Data-communications unit according to claim 3, **characterised in that** the distinguishing means at the input side of the FIFO memory (30, 31) comprise a multiplexer (32, 33) and an input control (36, 37), and that the distinguishing means at the output side of the FIFO memory (30, 31) comprise a demultiplexer (34, 35) and an output control (38, 39).

## Patentansprüche

1. Datenübertragungseinheit, die für die asynchrone serielle Datenübertragung zwischen einem datenverarbeitenden Gerät und einem Peripheriegerät geeignet ist, mit ersten und zweiten Speichermitteln, die zwischen einem Verbindungsbus (4), der mit dem datenverarbeitenden Gerät zu verbinden ist, und Verbindungsmitteln (13, 15, 19), die mit dem Peripheriegerät zu verbinden sind, verbunden sind, um in sequentieller vorläufiger Weise in dem ersten Speichermittel Daten aus einer Übertragung zwischen dem datenverarbeitenden Gerät und der Peripherieausrüstung zu speichern und um in dem zweiten Speichermittel Verwaltungsdaten zum Verwalten der Übertragung zu speichern, wobei das erste Speichermittel in der Übertragungsrichtung einen FIFO-Speicher (12, 18) mit verschiedenen Speicherorten umfasst, **dadurch gekennzeichnet, dass** die zweiten Speichermittel je Übertragungsrichtung einen zweiten FIFO-Speicher (14, 20) umfassen, wobei beide FIFO-Speicher (12, 14; 18, 20) in synchroner Weise für jede Schreiboperation und jede Leseoperation für einen Speicher getaktet werden.

2. Datenübertragungseinheit nach Anspruch 1, **dadurch gekennzeichnet, dass** für jede Übertragungsrichtung erste und zweite Speichermittel und zugeordnete Verbindungsmittel (13, 15, 19) zwischen dem Verbindungsbus (4) und dem Peripheriegerät verbunden sind, dass die FIFO-Speicher (12, 14) die der einen Übertragungsrichtung zugeordnet sind, in unabhängiger Weise von den FIFO-Speichern (18, 20) getaktet werden, die der anderen Übertragungsrichtung zugeordnet sind.

3. Datenübertragungseinheit, die für die asynchrone serielle Datenübertragung zwischen einem datenverarbeitenden Gerät und einem Peripheriegerät geeignet ist, mit Speichermitteln, die zwischen einem Verbindungsbus (4), der mit dem datenverarbeitenden Gerät zu verbinden ist, und Verbindungsmitteln (13, 15, 19), die mit dem Peripheriegerät zu verbinden sind, verbunden sind, um in sequentieller vorläufiger Weise Daten aus einer Übertragung zwischen dem datenverarbeitenden Gerät und der Peripherieausrüstung zu speichern und um Verwaltungsdaten zum Verwalten der Übertragung zu speichern, **dadurch gekennzeichnet, dass** die Speichermittel aus einem einzelnen FIFO-Speicher (30, 31) je Übertragungsrichtung bestehen, während Unterscheidungsmittel vorgesehen sind, um während einer Eingabeoperation, abhängig von dem Typ des einzugebenden Datengegenstandes, auch eine Fahne einzugeben, die auf den Datengegenstand hinweist, und um während einer Leseoperation, abhängig von einer gelesenen Fahne, den zugehörigen Datengegenstand weiterzutransportieren.

4. Datenübertragungseinheit nach Anspruch 3, **dadurch gekennzeichnet, dass** das Unterscheidungsmittel an der Eingangsseite des FIFO-Speichers (30, 31) einen Multiplexer (32, 33) und eine Eingangs-Steuerung (36, 37) umfasst, und dass die Unterscheidungsmittel auf der Ausgangsseite des FIFO-Speichers (30, 31) einen Demultiplexer (34, 35) und eine Ausgangs-Steuerung (38, 39) umfassen.

## Revendications

1. Unité de transmission de données appropriée pour une transmission de données sérielles asynchrones entre un dispositif de traitement de données et un dispositif périphérique, comprenant des premier et second moyens de mémoire montés entre un bus de connexion (4) à connecter au dispositif de traitement de données, et des moyens de couplage (13, 15, 19) à connecter au dispositif périphérique, pour mémoriser provisoirement séquentiellement dans les premiers moyens de mémoire des données provenant d'une transmission entre le dispositif de traitement des données et l'équipement périphérique, et pour mémoriser, dans les seconds moyens de mémoire, des données de gestion afin de gérer la transmission, les premiers moyens de mémoire comprenant pour chaque sens de transmission, une mémoire FIFO (12, 18) ayant plusieurs emplacements de mémoire, **caractérisée en ce que** les seconds moyens de mémoire comprennent, pour chaque sens de transmission, une seconde mémoire FIFO (14, 20), les deux mémoires FIFO (12, 14; 18, 20) étant synchronisées pour chaque opération d'écriture et chaque opération de lecture pour une mémoire.

2. Unité de transmission de données selon la revendication 1, **caractérisée en ce que**, pour l'un ou l'autre sens de transmission, des premier et second moyens de mémoire et moyens de couplage associés (13, 15, 19) sont couplés entre le bus de connexion (4) et le dispositif périphérique, les mémoires FIFO (12, 14) associées au premier sens de transmission étant synchronisées indépendamment des mémoires FIFO (18, 20) associées à l'autre sens de transmission.

3. Unité de transmission de données appropriée pour une transmission de données sérielles asynchrones entre un dispositif de traitement de données et un dispositif périphérique, comprenant des moyens de mémoire qui sont montés entre un bus de connexion (4) à connecter au dispositif de traitement de données, et des moyens de couplage (13, 15, 19) à connecter au dispositif périphérique, pour mémoriser provisoirement séquentiellement des données provenant d'une transmission entre le dispositif de traitement de données et l'équipement périphérique, et pour mémoriser des données de gestion afin de gérer la transmission, **caractérisée en ce que** les moyens de mémoire sont constitués d'une seule mémoire FIFO (30, 31) pour chaque sens de transmission, tandis que des moyens distinctifs sont prévus pour, durant une opération d'entrée, en fonction du type d'un élément de données à entrer, entrer également un drapeau représentatif de l'élément de données, et pour, durant une opération de lecture, en fonction d'une lecture du drapeau, transporter en outre l'élément de données associé.

4. Unité de transmission de données selon la revendication 3, **caractérisée en ce que** les moyens distinctifs sur le côté d'entrée de la mémoire FIFO (30, 31) comportent un multiplexeur (32, 33) et une commande d'entrée (36, 37), et **en ce que** les moyens distinctifs sur le côté sortie de la mémoire FIFO (30, 31) comportent un démultiplexeur (34, 35) et une commande de sortie (38, 39).
